# EUROPEAN PATENT SPECIFICATION

(11) **EP 2 891 778 B1**
(45) Date of publication and mention of the grant of the patent: **07.09.2016**
(21) Application number: 14195871.0
(22) Date of filing: 02.12.2014
(51) Int. Cl.: F01N 3/28, F01N 1/08, F01N 3/08, F01N 3/10

(54) **Exhaust system for motorcycle with catalyst inside of silencer**
Abgassystem für ein Motorrad mit Katalysator innerhalb eines Schalldämpfers
Système d'échappement pour motocyclette avec catalyseur dans un silencieux

(30) Priority: 04.12.2013 JP 2013250895
(43) Date of publication of application: 08.07.2015
(73) Proprietor: HONDA MOTOR CO., LTD., Tokyo, 107-8556 (JP)
(72) Inventor: Shibuki, Katsuaki, Wako-shi, Saitama 351-0193 (JP); Yazaki, Masaya, Wako-shi, Saitama 351-0193 (JP)
(74) Representative: Stevens, Jason Paul

(56) References cited:
- EP-A1- 0 579 956
- CN-U- 201 627 625
- JP-A- H05 262 272
- JP-A- 2005 220 814
- JP-A- 2007 085 324
- JP-A- 2007 321 595
- US-A1- 2006 201 742

## Description

The present invention relates to an exhaust system for a motorcycle in which exhaust gas discharged from a cylinder head of an engine main body mounted on a vehicle body frame is conducted into an exhaust muffler arranged in the rear of and below the engine main body, and a catalyzer casing of generally cylindrical shape retaining a catalyzer (catalyst) is accommodated in the exhaust muffler.

An exhaust system in which a catalyzer extending in the lateral direction of the vehicle is accommodated within an exhaust muffler is already known from Japanese Patent No. 4727503.

In the exhaust system disclosed in Japanese Patent No. 4727503, space within the exhaust muffler is used effectively, to thereby make it possible to increase a capacity of the catalyzer. However, since an exhaust gas conduit tube for introducing the exhaust gas into the exhaust muffler is connected to one lateral side of the exhaust muffler, the exhaust system as a whole increases in size in the lateral direction, which is disadvantageous as it then becomes difficult to ensure the maximum bank angle.

An alternative form of exhaust system including a catalyzer extending in longitudinal direction of the vehicle is known from JP 2007-085324.

The present invention has been made in consideration of the above described circumstances, and it is an objective of at least the preferred embodiments to provide an exhaust system for a motorcycle which makes it easy to ensure a bank angle, and also ensures a capacity of a catalyzer and the flow length of the exhaust gas to thereby improve a purification performance.

According to a first aspect of the present invention, there is provided an exhaust system for a motorcycle in which exhaust gas discharged from a cylinder head of an engine main body mounted on a vehicle body frame is conducted into an exhaust muffler arranged in the rear of and below the engine main body, and a catalyzer casing of generally cylindrical shape retaining a catalyzer is accommodated in the exhaust muffler, comprising: the exhaust muffler being provided at opposite sides thereof in the lateral direction of the vehicle with a pair of lateral walls which are inclined so that their lower ends are closer to each other than their upper ends, and being formed in the shape of an inverted trapezoid in a longitudinal elevational view from the rear; an exhaust gas conduit passing through a front end wall of the exhaust muffler so as to conduct the exhaust gas; a bent section formed in an intermediate portion of the exhaust gas conduit within the exhaust muffler and changing the flow direction of the exhaust gas in the exhaust gas conduit from the longitudinal direction of the vehicle to the lateral direction of the vehicle; and a catalyzer casing having one end connected to a downstream end portion of the exhaust gas conduit within the exhaust muffler and being arranged in an inclined condition so as to become lower as it approaches one side in the lateral direction of the vehicle.

With this construction, in which the catalyzer casing slopes downwards to one side, it is possible to make it easy to ensure the bank angle, and the capacity of the catalyzer and the flow length of the exhaust gas can be ensured to thereby improve the purification performance.

Preferably, the exhaust system further comprises a tail pipe for discharging the exhaust gas from the exhaust muffler, wherein the tail pipe is joined to a rear upper part of the exhaust muffler on one lateral side, and the exhaust gas conduit is arranged on the other lateral side so as to pass through an upper part of the front end wall.

With this arrangement, the flow length of the exhaust gas can be increased within the exhaust muffler, so that adjustment can easily be carried out so as to improve output characteristics of the engine.

Preferably, the catalyzer casing has an elliptical transverse cross-sectional configuration, a longer axis of which extends in the longitudinal direction of the vehicle, and is formed flatter in the vertical direction.

Thus, even if the cross-sectional area of the catalyzer casing is increased so as to ensure the capacity of the catalyzer, it is still possible to ensure an appropriate distance between the bottom of the exhaust muffler and the ground while avoiding vertical enlargement of the exhaust muffler, which thereby contributes to ensuring the bank angle.

Preferably, the exhaust system further comprises a support means supporting the catalyzer casing and being fixed on the exhaust muffler, wherein the support means is configured to allow the exhaust gas to flow above and below the catalyzer casing.

With this arrangement, since the support means supporting the catalyzer casing is configured to allow the exhaust gas to flow on the upper and lower sides of the catalyzer casing, the external form of the exhaust muffler can be kept compact and the capacity of the exhaust muffler can be ensured.

Preferably, the exhaust muffler includes a first expansion chamber in which the catalyzer casing is accommodated and a second expansion chamber which is arranged to the rear of the first expansion chamber, laterally offset to one side and which is in communication with the first expansion chamber through a communicating tube; whereby the exhaust muffler is configured such that a side stand which comes into contact with the ground in a standing position thereof can be arranged on the other lateral side, such that, when the side stand is in the standing position, at least a portion of the side stand overlaps with the second expansion chamber in a side view.

With this arrangement, the exhaust muffler can be made compact in the longitudinal direction of the vehicle and the capacity of the exhaust muffler can be ensured.

In a preferred form, a rear end wall of the exhaust muffler forms a rear end of the second expansion chamber and is inclined forwardly and upwardly, and at least a rear part of the communicating tube is configured to be inclined rearwardly and downwardly.

Thus, the flow length of the exhaust gas can be made longer while extending the communicating tube to thereby increase flow speed of the exhaust gas.

In a further preferred form, the tail pipe for discharging the exhaust gas from the second expansion chamber is connected to a rear upper part of the exhaust muffler in such a way as to communicate with an upper part of the second expansion chamber.

With this arrangement, since the tail pipe which communicates with the upper part of the second expansion chamber is connected to the rear upper part of the exhaust muffler, the exhaust muffler can be made longitudinally compact, whereby concentration of mass can be achieved.

In a preferred form, within the second expansion chamber, a rear end of the communicating tube is arranged to the rear of a portion of the tail pipe which communicates with the second expansion chamber.

According to this arrangement, since the rear end of the communicating tube is located to the rear of the portion of the tail pipe which communicates into the second expansion chamber, the exhaust gas flowing out of the communicating tube within the second expansion chamber flows in such way as to turn around upwardly in a generally circular arc shape along the rear end wall, whereby the volume of the second expansion chamber can be used evenly and effectively.

A preferred embodiment of the invention will now be described by way of example only and with reference to the accompanying drawings, in which:
FIG. 1 is a left side elevational view of a motorcycle;
FIG. 2 is a cross-sectional view taken along line 2-2 of FIG. 1;
FIG. 3 is a view taken in the direction of arrow 3 of FIG. 2;
FIG. 4 is a view taken in the direction of arrow 4 of FIG. 2;
FIG. 5 is a longitudinal cross-sectional view of an exhaust muffler associated with the front bank when viewed from the right, the rear and above; and FIG. 6 is a cross-sectional view taken along line 6-6 of FIG. 3.

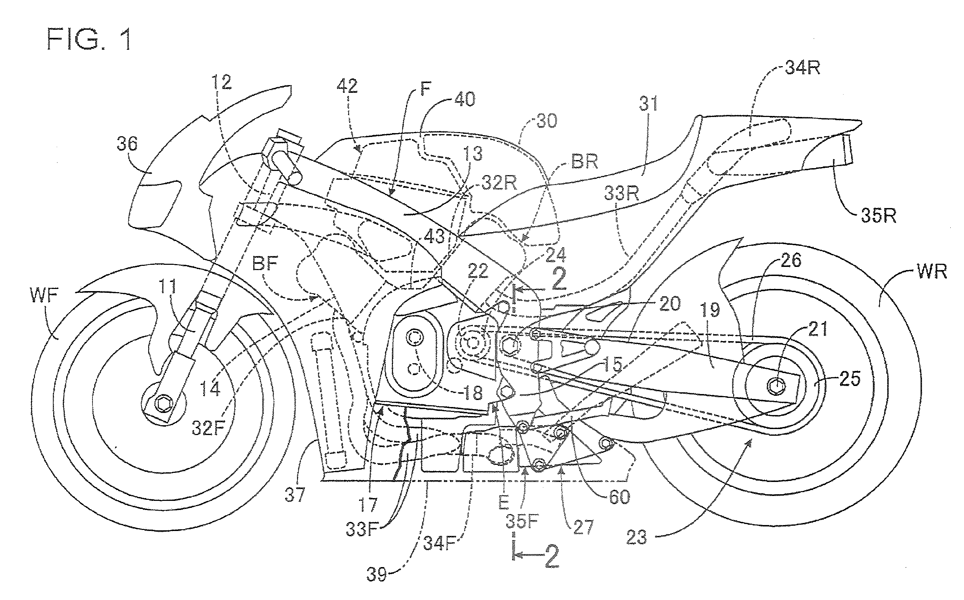

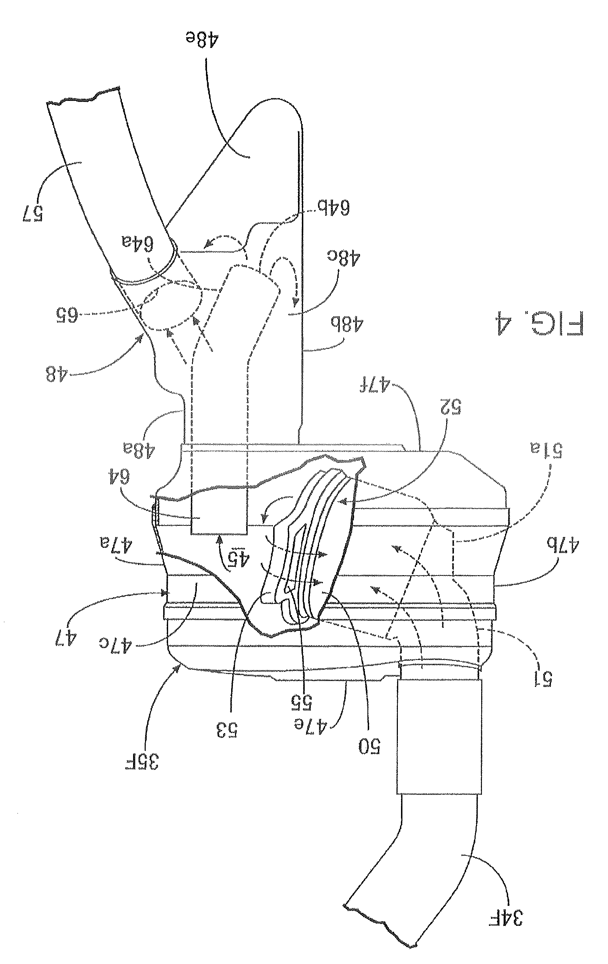

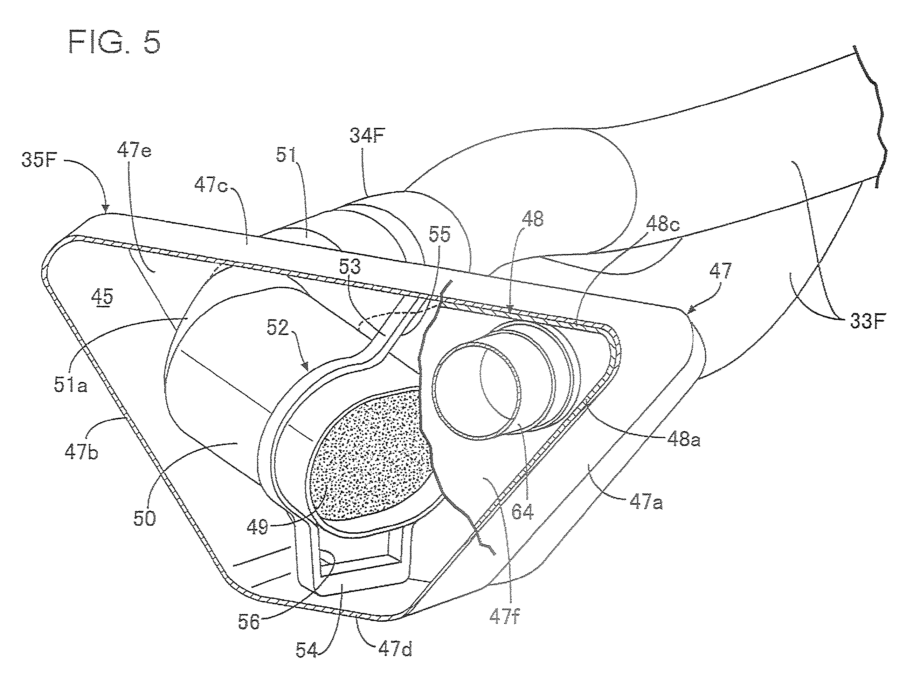

An embodiment of the present invention will now be described with reference to accompanying FIGS. 1 through 6. In the following description, terms such as "front", "rear", "left", "right", "upper" and "lower" should be interpreted from the viewpoint of a rider riding on a motorcycle in normal use.

Referring first to FIG. 1, a vehicle body frame F of a two-wheeled motorcycle (as an example of a straddle type vehicle) includes a front fork 11 pivotally carrying a front wheel WF, a head pipe 12 supporting the front fork 11 in a steerable manner, a pair of left and right main frames 13 extending downwardly and rearwardly from the head pipe 12, a pair of left and right engine hangers 14 which are welded to the head pipe 12 and each of the main frames 13 and extend downwardly from the main frames 13, and a pair of left and right pivot frames 15 extending downwardly from each rear part of the main frames 13.

On the vehicle body frame F, there is carried an engine body 17 of a four cylinder V-type engine E, for example. In this embodiment, the engine body 17 pivotally supports a crankshaft 18 which extends in the lateral direction of the vehicle, and is supported by each lower portion of the pair of engine hangers 14, each intermediate portion of the main frames 13, and upper and lower portions of the pair of pivot frames 15. The engine main body 17 has a front cylinder bank BF and a rear cylinder bank BR, which are arranged in a V-shape in such a manner that the cylinders of each pair are arranged side-by-side in the axial direction of the crankshaft 18.

A front end portion of a swing arm 19 is pivotally supported in a swingable manner through a pivot shaft 20 on each vertically intermediate portion of the pair of pivot frames 15. At a rear end portion of the swing arm 19 is rotatably supported an axle 21 of a rear wheel WR.

The motive power from an output shaft 22 of a transmission accommodated within the engine main body 17 is transmitted through a chain drive means 23 to the rear wheel WR. The chain drive means 23 is composed of a drive sprocket 24 which is fixed to the output shaft 22, a driven sprocket 25 which is fixed to the axle 21 of the rear wheel WR, and an endless chain 26 which is wrapped around these sprockets 24 and 25.

A front part of the swing arm 19 is connected through a link mechanism 27 to each lower portion of the pair of pivot frames 15. A rear cushion unit (not shown) is provided between a component of the link mechanism 27 and the rear part of the main frame 13.

Above the rear bank BR of the engine main body, there is arranged a fuel tank 30 which is supported by the main frame 13. A rider's seat 31 arranged to the rear of the fuel tank 30 is supported by a rear part of the vehicle body frame F.

Front bank exhaust pipes 33F are connected to each cylinder of the cylinder head 32F of the front bank BF of the engine main body 17. The front bank exhaust pipes 33F pass under the engine main body 17 and extend rearwardly, and are joined in common to a front bank collecting exhaust pipe 34F. The front bank collecting exhaust pipe 34F is joined to a front bank exhaust muffler 35F which is located to the rear of and under the engine main body 17. Moreover, rear bank exhaust pipes 33R are connected to each cylinder of the cylinder head 32R of the rear bank BR of the engine main body 17 and extend rearwardly. The rear bank exhaust pipes 33R are connected to a rear bank collecting exhaust pipe 34R to the rear of the rider's seat 31. The rear bank collecting exhaust pipe 34R is joined to a rear bank exhaust muffler 35R which is located above the rear wheel WR.

The head pipe 12 of the vehicle body frame F is covered from the forward direction thereof with a front cowling 36. The front part of the vehicle body frame F and a part of the engine main body 17 are covered from each lateral side with a pair of left and right centre cowlings 37. The rear part of the vehicle body frame F, the rear bank exhaust pipes 33R, the rear bank collecting exhaust pipe 34R and the rear bank exhaust muffler 35R are covered with a rear cowling 38, which allows the rear part of the rear bank exhaust muffler 35R to project rearwardly therefrom. In addition, a portion of the front bank exhaust pipes 35F, the front bank collecting exhaust pipe 34F and the front bank exhaust muffler 35F are covered from beneath and from each lateral side with an under cowling 39, a front part of which is continuously connected to a lower part of the centre cowling 37.

Above the engine main body 17 and forwardly of the fuel tank 30 is arranged an air cleaner 42, which is common to the front bank BF and the rear bank BR. The air cleaner 42, a part of which is accommodated in a valley 43 between the front bank BF and the rear bank BR, is located between the pair of left and right main frames 13 and, together with the fuel tank 30, is covered with a cover 40.

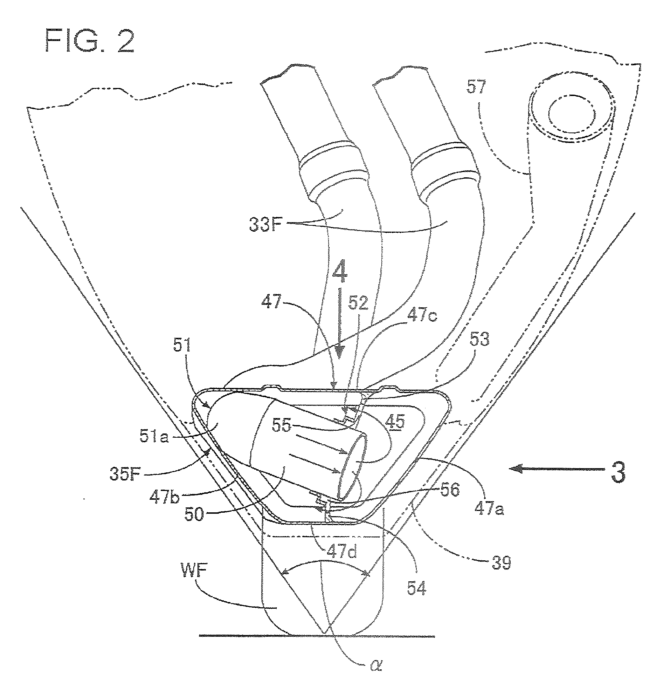

Referring now to FIGS. 2 to 6, the front bank exhaust muffler 35F is constituted in accordance with a preferred embodiment of the present invention, and includes a first casing 47 forming a first expansion chamber 45, and a second casing 48 forming a second expansion chamber 46 which is smaller in volume than the first expansion chamber 45 and which is provided continuous with a rear part of the first casing 47.

The first casing 47 comprises a first right side wall 47a which is inclined in such a way that its lower end is located laterally further inward than its upper end, a first left side wall 47b which is inclined in such a way that its lower end is closer to the first right side wall 47a than its upper end, a first top wall 47c which connects upper end portions of the first right side wall 47a and the first left side wall 47b, a first bottom wall 47d which connects lower end portions of the first left side wall 47b and the first right side wall 47a, a front end wall 47e which connects front end portions of the first left side wall 47b, the first right side wall 47a, the first top wall 47c and the first bottom wall 47d, and a first rear end wall 47f which connects rear end portions of the first left side wall 47b, the first right side wall 47a, the first top wall 47c and the first bottom wall 47d.

The second casing 48 is provided continuous with a rear part of the first casing 47, such that the first rear end wall 47f of the first casing 47 functions as a front end wall of the second expansion chamber 46, and the second casing 48 is laterally offset to one side (the right side in this embodiment) to thereby be continuously connected to the rear part of the first casing 47. This second casing 48 comprises a second right side wall 48a which is inclined in such a way that its lower end is located laterally further inward than its upper end, located in a position where it substantially overlaps with the first right side wall 47a of the first casing 47 when viewed longitudinally from the rear, a second left side wall 48b located laterally inwardly of and facing the second right side lateral wall 48a and extending substantially vertically, a second top wall 48c which connects upper end portions of the second right side wall 48a and the second left side wall 48b and located such that a part thereof substantially overlaps with the first top wall 47c of the first casing 47 when viewed longitudinally from the rear, a second bottom wall 48d which connects between lower end portions of the second right side wall 48a and the second left side wall 48b and located such as to substantially overlap with the first bottom wall 47d of the first casing 47 when viewed longitudinally from the rear, the first rear end wall 47f connecting in common front end portions of the second right side wall 48a, the second left side wall 48b, the second top wall 48c and the second bottom wall 48d, and a second rear end wall 48e connecting in common rear end portions of the second right side wall 48a, the second left side wall 48b, the second ceiling wall 48c and the second bottom wall 48d.

When the entire front bank exhaust muffler 35F as constructed above is viewed longitudinally from the rear, it has first and second right side walls 47a, 48a which substantially overlap with each other on one side in the lateral direction of the vehicle, and the first left side wall 47b on the other side. The first and second right side walls 47a, 48a and the first left side wall 47b, which are located at opposite sides in the lateral direction of the vehicle, are inclined so that their lower ends are closer together than their upper ends, so that the front bank exhaust muffler 35F is formed in the shape of an inverted trapezoid in a longitudinal elevational view as seen from the rear of the vehicle.

Further, the rear end wall of the front bank exhaust muffler 35F, that is, the second rear end wall 48e of the second casing 48, is configured to be inclined forwardly and upwardly while forming the rear end of the second expansion chamber 46.

Within the front bank exhaust muffler 35F, there is accommodated a catalyzer casing (catalyst casing) 50 which retains a catalyzer (catalyst) 49 and is formed in a generally cylindrical shape. An end portion of the catalyzer casing 50 is connected to a downstream end portion of an exhaust gas conduit 51 which is in turn joined to the front bank collecting exhaust pipe 34F and passes through the front end wall 47e of the front bank exhaust muffler 35F, that is, the front end wall 47e of the first casing 47.

The exhaust gas conduit 51 passes through the front end wall 47e of the first casing 47 to thereby project into the first expansion chamber 45. In an intermediate part of this exhaust gas conduit 51 within the front bank exhaust muffler 35F, that is, in this embodiment, in an intermediate part in the first expansion chamber 45, there is formed a bent section 51 a for changing the flow direction of the exhaust gas within the exhaust gas conduit 51 from the longitudinal direction of the vehicle to the lateral direction of the vehicle.

Further, the catalyzer casing 50, one end of which is connected to a downstream end portion of the exhaust gas conduit 51 within the first expansion chamber 45 of the front bank exhaust muffler, is of generally elliptic transverse cross-sectional shape, with a longer axis extending in the longitudinal direction of the vehicle. The catalyzer casing 50, which is formed to be flatter in the vertical direction, is arranged in an inclined condition so that it becomes lower as it approaches one side in the lateral direction of the vehicle (the right side in this embodiment).

The catalyzer casing 50 is supported by a support means 52 which is fixed on the first casing 47 of the front bank exhaust muffler 35F. The support means 52 is configured to allow the exhaust gas to flow around the upper and lower sides of the catalyzer casing 50. In this embodiment, the support means 52 includes an upper support wall 53 which is fixed to an inner surface of the first top wall 47c of the first casing 47, and a lower support wall 54 which is fixed to an inner surface of the first bottom wall 47d of the first casing 47. The catalyzer casing 50 is supported between a lower part of the upper support wall 53 and an upper part of the lower support wall 54. An opening section 55 for allowing the exhaust gas to flow above the catalyzer casing 50 is provided in the upper support wall 53, while an opening section 56 for allowing the exhaust gas to flow below the catalyzer casing 50 is provided in the lower support wall 54.

A tail pipe 57 for discharging the exhaust gas from the front bank exhaust muffler 35F is joined to a rear upper part of the front bank exhaust muffler 35F on one lateral side (a right side in this embodiment). In this embodiment, an upstream end portion of the tail pipe 57 which communicates with an upper part of the second expansion chamber 46 is joined to a rear part of the second top wall 48c of the second casing 48. The tail pipe 57 is arranged so as to extend upwardly and rearwardly on the right side of the rear wheel WR. In addition, the tail pipe 57 is covered with a thermally insulating guard member 58 from the outside thereof. The thermally insulating guard member 58 is attached to the pivot frame 15 on the right side.

The exhaust gas conduit 51 is arranged so as to pass through an upper part of the front end wall 47e on the other lateral side (a left side in this embodiment) of the front bank exhaust muffler 35F.

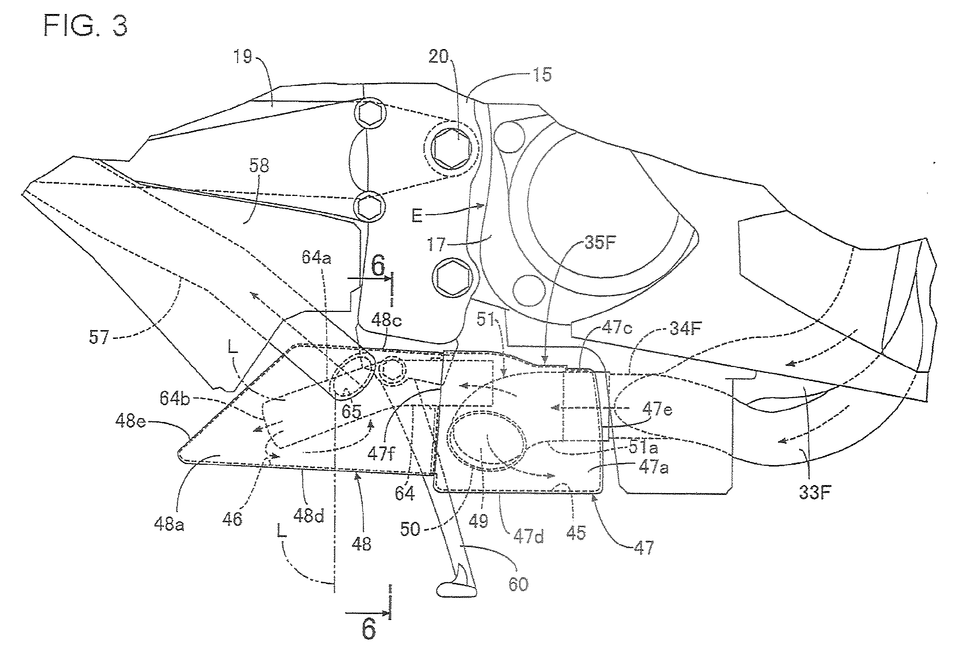

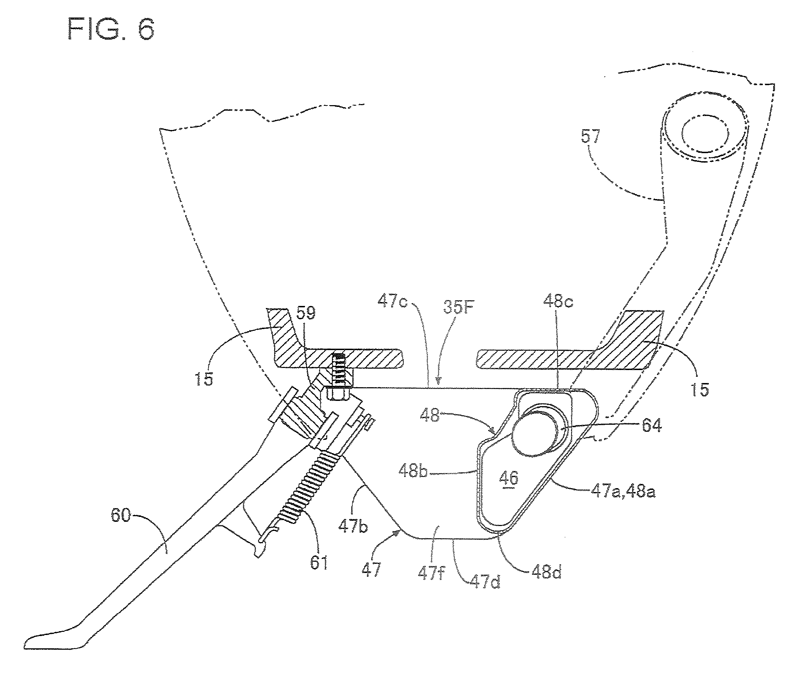

A support member 59 is fixed to the lower portion of the pivot frame 15 on the left side, and a side stand 60 which is configured to come into contact with the ground in its standing position (as shown in FIGS. 3 and 6) is supported on the support member 59 so that it can rotate between the standing position and a retracted position (as shown in FIG. 1) raised upwardly from the standing position. When the side stand is in the retracted position, a coil spring 61 for energizing the rotation of the side stand 60 is disposed between the side stand 60 and the support member 59.

The side stand 60 is arranged on the other side (the left side in this embodiment) of the second expansion chamber 46 in such a manner that when the side stand 60 is in the standing position, at least a portion of the side stand 60 overlaps with the second expansion chamber 46 of the front bank exhaust muffler 35F in a side view, as shown clearly in FIG. 3.

The first expansion chamber 45 and the second expansion chamber 46 are connected with each other through a communicating tube 64 which passes through the first rear end wall 47f of the first casing 47. At least a rear portion (a rear half portion 64a in this embodiment) of the communicating tube 64 is formed so as to be inclined rearwardly and downwardly while facing the second rear end wall 48e, which as mentioned above is configured so as to be inclined forwardly and upwardly.

Further, within the second expansion chamber 46, a rear end 64b of the communicating tube 64 is arranged to the rear of the portion 65 of the tail pipe 57 which communicates with the second expansion chamber 46. That is, as shown in FIG. 3, the rear end 64b of the communicating tube 64 is arranged rearwardly of an imaginary vertical line L extending from a rear end of the portion 65 of the tail pipe 57 which communicates with the second expansion chamber 46.

The operation of this embodiment will now be described. The front bank exhaust muffler 35F has first and second right side walls 47a, 48a and first left side wall 47b which are located at opposite sides in the lateral direction of the vehicle so as to substantially overlap with each other when the whole thereof is viewed longitudinally from the rear. The first and second right side walls 47a, 48a and the left side wall 47b located at opposite lateral sides are inclined in such a way that their lower ends are closer to each other than their upper ends and are formed in the shape of an inverted trapezoid in an elevational view. The bent section 51 a for changing the flow direction of the exhaust gas from the longitudinal direction of the vehicle to the lateral direction of the vehicle is formed in the intermediate portion, within the exhaust muffler 35F, of the exhaust gas conduit 51 which passes through the front end wall 47e of the front bank exhaust muffler 35F so as to conduct the exhaust gas. Then, the catalyzer casing 50 which retains the catalyzer 49 and is formed in a generally cylindrical shape has one end portion connected to the downstream end portion of the exhaust gas conduit 51 within the front bank exhaust muffler 35F and is arranged in an inclined condition so as to be lower as it approaches one lateral side (the right side in this embodiment). With this construction, it is possible to make it easy to ensure the bank angle α of the motorcycle (as shown in FIG. 2), and the capacity of the catalyzer and the flow length of the exhaust gas can be ensured to thereby improve the purification performance.

Further, since the tail pipe 57 for discharging the exhaust gas from the front bank exhaust muffler 35F is joined to the rear upper part of the front bank exhaust muffler 35F on one lateral side (the right side in this embodiment), and the exhaust gas conduit 51 is arranged on the other lateral side (the left side in this embodiment) in such a way as to pass through the upper part of the front end wall 47e, the flow length of the exhaust gas is increased within the front bank exhaust muffler 35F, whereby adjustment can be easily carried out so as to make it possible to improve the output characteristics of the engine E.

The catalyzer casing 50 has a generally elliptical cross-sectional configuration, the longer axis of which extends in the longitudinal direction of the vehicle. Therefore, even if the cross-sectional area of the catalyzer casing 50 is increased in order to increase the capacity of the catalyzer 50, it is possible to ensure a distance between the bottom (that is, each of the first and second bottom walls 47d, 48d) of the front bank exhaust muffler 35F and the ground while avoiding vertical enlargement of the front bank exhaust muffler 35F, which can contribute to ensuring the bank angle α.

Further, since the support means 52 which supports the catalyzer casing 50 and is fixed on the front bank exhaust muffler 35F is configured to allow the exhaust gas to flow above and below the catalyzer casing 50, an external form of the front bank exhaust muffler 35F can be made compact and the capacity of the front bank exhaust muffler 35F can be ensured.

Moreover, the front bank exhaust muffler 35F includes the first expansion chamber 45 in which the catalyzer casing 50 is accommodated and the second expansion chamber 46 which is arranged to the rear of the first expansion chamber 45, offset to one side in the lateral direction of the vehicle, and which is in communication through the communicating tube 64 with the first expansion chamber 45. The side stand 60 which comes into contact with the ground in the standing position thereof is arranged on the other lateral side (the left side in this embodiment) of the second expansion chamber 46 in such a manner that, in its standing position, at least a portion of the side stand 60 overlaps with the second expansion chamber 46 in a side view. Therefore, the side stand 60 and the second expansion chamber 46 can be arranged side by side in the lateral direction of the vehicle, and the capacity of the front bank exhaust muffler 35F can be ensured, while compactly arranging the front bank exhaust muffler 35F in the longitudinal direction of the vehicle.

Further, the rear end wall of the front bank exhaust muffler 35F, that is, the second rear end wall 48e of the second casing 48, forms the rear end of the second expansion chamber 46 and is inclined forwardly and upwardly, and at least the rear part of the communicating tube 46 is configured to be inclined rearwardly and downwardly. Therefore, the flow length of the exhaust gas can be made longer while extending the communicating tube 64, to thereby increase flow speed of the exhaust gas.

Further, since the tail pipe 57 which discharges the exhaust gas from the second expansion chamber 46 is joined to the rear upper part of the front bank exhaust muffler 35F in a state of communicating with the upper part of the second expansion chamber 46, the front bank exhaust muffler 35F can be made longitudinally compact, whereby concentration of mass can be achieved.

In addition, since the rear end 64b of the communicating tube 64 is arranged, within the second expansion chamber 46, to the rear of the portion 65 of the tail pipe 57 which communicates with the second expansion chamber 46, the exhaust gas flowing out of the communicating tube 64 within the second expansion chamber 46 flows in such way as to turn around upwardly in a circular arc shape along the rear end wall 48e, whereby the volume of the second expansion chamber 46 can be used evenly and effectively.

While a preferred embodiment of the present invention has been described, the present invention is not limited to the above described embodiment, and various design changes and modifications may be made without departing from the scope of the present invention as defined in the appended claims.

## Claims

1. An exhaust system for a motorcycle in which exhaust gas discharged from a cylinder head (32F) of an engine main body (17) mounted on a vehicle body frame (F) is conducted into an exhaust muffler (35F) arranged to the rear of and below the engine main body (17), and a catalyzer casing (50) of generally cylindrical shape retaining a catalyzer (49) is accommodated in the exhaust muffler (35F), the exhaust system, comprising:
the exhaust muffler (35F) being provided at opposite sides thereof in the lateral direction of the vehicle with a pair of lateral walls (47a, 47b) which are inclined so that their lower ends are closer to each other than their upper ends, and being formed in the shape of an inverted trapezoid in a longitudinal elevational view from the rear,
an exhaust gas conduit (51) passing through a front end wall (47e) of the exhaust muffler (35F) so as to conduct the exhaust gas,
a bent section (51 a) formed in an intermediate portion of the exhaust gas conduit (51) within the exhaust muffler (35F) and changing the flow direction of the exhaust gas in the exhaust gas conduit (51) from the longitudinal direction of the vehicle to the lateral direction of the vehicle, and
the catalyzer casing (50) having one end connected to a downstream end portion of the exhaust gas conduit (51) within the exhaust muffler (35F) and being arranged in an inclined condition so as to become lower as it approaches one side in the lateral direction of the vehicle.

2. An exhaust system for a motorcycle according to claim 1, further comprising a tail pipe (57) for discharging the exhaust gas from the exhaust muffler (35F), wherein the tail pipe (57) is joined to a rear upper part of the exhaust muffler (35F) on one lateral side, and the exhaust gas conduit (51) is arranged on the other lateral side so as to pass through an upper part of the front end wall.

3. An exhaust system for a motorcycle according to claim 1 or 2, wherein the catalyzer casing (50) has a generally elliptical transverse cross-sectional configuration, a longer axis of which extends in the longitudinal direction of the vehicle, and is formed flatter in the vertical direction.

4. An exhaust system for a motorcycle according to any one of claims 1 to 3, further comprising a support means (52) supporting the catalyzer casing (50) and being fixed on the exhaust muffler (35F), wherein the support means (52) is configured to allow the exhaust gas to flow above and below the catalyzer casing (50).

5. An exhaust system for a motorcycle according to any one of claims 1 to 4, wherein the exhaust muffler (35F) includes a first expansion chamber (45) in which the catalyzer casing (50) is accommodated and a second expansion chamber (46) which is arranged to the rear of the first expansion chamber (45), laterally offset to one side and which is in communication with the first expansion chamber (45) through a communicating tube (64); whereby the exhaust muffler is configured such that a side stand (60) which comes into contact with the ground in a standing position thereof can be arranged on the other lateral side, such that, when the side stand (60) is in the standing position, at least a portion of the side stand (60) overlaps with the second expansion chamber (46) in a side view.

6. An exhaust system for a motorcycle according to claim 5, wherein a rear end wall (48e) of the exhaust muffler (35F) forms a rear end of the second expansion chamber (46) and is inclined forwardly and upwardly, and at least a rear part of the communicating tube (64) is configured to be inclined rearwardly and downwardly.

7. An exhaust system for a motorcycle according to claim 5 or 6, wherein the tail pipe (57) for discharging the exhaust gas from the second expansion chamber (46) is connected to a rear upper part of the exhaust muffler (35F) in such a way as to communicate with an upper part of the second expansion chamber (46).

8. An exhaust system for a motorcycle according to claim 7, wherein, within the second expansion chamber (46), a rear end (64b) of the communicating tube (64) is arranged to the rear of a portion (65) of the tail pipe (57) which communicates with the second expansion chamber (46).

9. A motorcycle having an exhaust system as claimed in any preceding claim.

## Patentansprüche

1. Ein Auspuffsystem für ein Motorrad, in welchem von einem Zylinderkopf (32F) eines Motorenhauptkörpers (17), der an einer Fahrzeugkarosserie (F) montiert ist, ausgestoßene Auspuffgase in einen Auspuffschalldämpfer (35F) hinein geleitet werden, der rückwärtig und unterhalb des Motorenhauptkörpers (17) angeordnet ist, und ein Katalysatorgehäuse (50) von allgemein zylindrischer Form, das einen Katalysator (49) hält, in dem Auspuffschalldämpfer (35F) untergebracht ist, welches Auspuffsystem aufweist:
der Auspuffschalldämpfer (35F) der auf gegenüberliegenden Seiten davon in der Querrichtung des Fahrzeugs mit einem Paar von Querwänden (47a, 47b) ausgerüstet ist, die derart geneigt sind, dass ihre unteren Enden einander näher sind als ihre oberen Enden, und die in einer Längsdraufsicht von hinten in der Form eines umgekehrten Trapezes gebildet sind,
eine Auspuffgasleitung (51), die eine vordere Endwand (47e) des Auspuffschalldämpfers (35F) derart durchläuft, dass sie das Auspuffgas leitet,
einen gebogenen Abschnitt (51 a), der in einem Mittelabschnitt der Auspuffgasleitung (51) innerhalb des Auspuffschalldämpfers (35F) gebildet ist und die Strömungsrichtung des Auspuffgases in der Auspuffgasleitung (51) von der Längsrichtung des Fahrzeugs zu der Querrichtung des Fahrzeugs ändert, und
das Katalysatorgehäuse (50) das ein Ende hat, das mit einem stromabwärtigen Endbereich der Auspuffgasleitung (51) innerhalb des Auspuffschalldämpfers (35F) verbunden und derart in einem geneigten Zustand angeordnet ist, dass es niedriger wird, während es sich einer Seite in der Querrichtung des Fahrzeugs nähert.

2. Ein Auspuffsystem für ein Motorrad nach Anspruch 1, ferner aufweisend ein Endrohr (57) zum Ausstoßen der Auspuffgase aus dem Auspuffschalldämpfer (35F), wobei das Endrohr (57) auf einer Querseite an einen hinteren oberen Teil des Auspuffschalldämpfers (35F) gefügt ist und die Auspuffgasleitung (51) derart an der anderen Querseite angeordnet ist, dass sie einen oberen Teil der vorderen Endwand durchläuft.

3. Ein Auspuffsystem für ein Motorrad nach Anspruch 1 oder 2, wobei das Katalysatorgehäuse (50) eine allgemein elliptische schräge Querschnittskonfiguration hat, deren längere Achse sich in der Längsrichtung des Fahrzeugs erstreckt und in der Vertikalrichtung flacher gebildet ist.

4. Ein Auspuffsystem für ein Motorrad nach einem der Ansprüche 1 bis 3, ferner aufweisend ein Stützmittel (52), welches das Katalysatorgehäuse (50) stützt und an dem Auspuffschalldämpfer (35F) fixiert ist, wobei das Stützmittel (52) eingerichtet ist, um zu ermöglichen, dass die Auspuffgase oberhalb und unterhalb dem Katalysatorgehäuse (50) strömen.

5. Ein Auspuffsystem für ein Motorrad nach einem der Ansprüche 1 bis 4, wobei der Auspuffschalldämpfer (35F) eine erste Expansionskammer (45), in welcher das Katalysatorgehäuse (50) untergebracht ist, und eine zweite Expansionskammer (46), welche rückwärtig der ersten Expansionskammer (45) und quer versetzt nach einer Seite hin angeordnet ist und welche über eine Verbindungsröhre (64) in Verbindung mit der ersten Expansionskammer (45) steht, aufweist; wodurch der Auspuffschalldämpfer derart eingerichtet ist, dass ein Seitenständer (60), der in einer stehenden Position desselben in Berührung mit dem Grund kommt, auf der anderen Querseite angeordnet sein kann, so dass, wenn der Seitenständer (60) in der stehenden Position ist, mindestens ein Bereich des Seitenständers (60) in einer Seitenansicht mit der zweiten Expansionskammer (46) überlappt.

6. Ein Auspuffsystem für ein Motorrad nach Anspruch 5, wobei eine hintere Endwand (48e) des Auspuffschalldämpfers (35F) ein hinteres Ende der zweiten Expansionskammer (46) bildet und nach vorn und oben geneigt ist, und mindestens ein hinterer Teil der Verbindungsröhre (64) eingerichtet ist, um nach hinten und unten geneigt zu sein.

7. Ein Auspuffsystem für ein Motorrad nach Anspruch 5 oder 6, wobei das Endrohr (57) zum Ausstoßen der Auspuffgase aus der zweiten Expansionskammer (46) auf eine Solche Weise mit einem hinteren oberen Teil des Auspuffschalldämpfers (35F) verbunden ist, dass es mit einem oberen Teil der zweiten Expansionskammer (46) in Verbindung steht.

8. Ein Auspuffsystem für ein Motorrad nach Anspruch 7, wobei innerhalb der zweiten Expansionskammer (46) ein hinteres Ende (64b) der Verbindungsröhre (64) rückwärtig eines Bereichs (65) des Endrohrs (57) angebracht ist, welcher mit der zweiten Expansionskammer (46) in Verbindung steht.

9. Ein Motorrad, das ein Auspuffsystem wie in einem der voranstehenden Ansprüche beansprucht hat.

## Revendications

1. Système d'échappement pour motocyclette, dans lequel le gaz d'échappement déchargé par une tête de cylindre (32F) d'un corps de moteur principal (17) monté sur un châssis de corps de véhicule (F) est conduit dans un pot d'échappement (35F) aménagé à l'arrière et en dessous du corps de moteur principal (17), et un boîtier de catalyseur (50) de forme générale cylindrique contenant un catalyseur (49) est reçu dans le pot d'échappement (35F), le système d'échappement comprenant :
le pot d'échappement (35F) pourvu, sur ses côtés opposés dans la direction latérale du véhicule, d'une paire de parois latérales (47a, 47b) qui sont inclinées de sorte que leurs extrémités inférieures soient plus proches l'une de l'autre que leurs extrémités supérieures et conformé en trapézoïde à l'envers dans une vue en élévation longitudinale de l'arrière,
un conduit de gaz d'échappement (51) passant à travers une paroi d'extrémité avant (47e) du pot d'échappement (35F) de manière à conduire le gaz d'échappement,
une section courbée (51a) formée dans une partie intermédiaire du conduit de gaz d'échappement (51) au sein du pot d'échappement (35F) et changeant la direction d'écoulement du gaz d'échappement dans le conduit de gaz d'échappement (51) de la direction longitudinale du véhicule à la direction latérale du véhicule, et
le boîtier de catalyseur (50) ayant une extrémité raccordée à une partie d'extrémité aval du conduit de gaz d'échappement (51) dans le pot d'échappement (35F) et étant aménagé dans un état incliné de manière à descendre à mesure qu'il se rapproche d'un côté dans la direction latérale du véhicule.

2. Système d'échappement pour une motocyclette selon la revendication 1, comprenant en outre un tuyau de queue (57) pour décharger le gaz d'échappement du pot d'échappement (35F), dans lequel le tuyau de queue (57) est joint à une partie supérieure arrière du pot d'échappement (35F) sur un côté latéral et le conduit de gaz d'échappement (51) est aménagé sur l'autre côté latéral de manière à passer à travers une partie supérieure de la paroi d'extrémité avant.

3. Système d'échappement pour une motocyclette selon la revendication 1 ou 2, dans lequel le boîtier de catalyseur (50) a une configuration en coupe transversale généralement elliptique, dont l'axe long s'étend dans la direction longitudinale du véhicule, et est plus aplati dans la direction verticale.

4. Système d'échappement pour une motocyclette selon l'une quelconque des revendications 1 à 3, comprenant en outre un moyen de support (52) supportant le boîtier de catalyseur (50) et fixé sur le pot d'échappement (35F), dans lequel le moyen de support (52) est configuré pour permettre au gaz d'échappement de s'écouler au-dessus et au-dessous du boîtier de catalyseur (50).

5. Système d'échappement pour une motocyclette selon l'une quelconque des revendications 1 à 4, dans lequel le pot d'échappement (35F) comprend une première chambre d'expansion (45), dans laquelle le boîtier de catalyseur (50) est reçu, et une seconde chambre d'expansion (46), qui est aménagée à l'arrière de la première chambre d'expansion (45), décalée latéralement d'un côté et en communication avec la première chambre d'expansion (45) via un tube de communication (64) ; dans lequel le pot d'échappement est configuré de sorte qu'un pied latéral (60), qui vient en contact avec le sol dans sa position dressée, puisse être aménagé sur l'autre côté latéral afin que, lorsque le pied latéral (60) est en position droite, au moins une partie du pied latéral (60) chevauche la seconde chambre d'expansion (46) en vue latérale.

6. Système d'échappement pour une motocyclette selon la revendication 5, dans lequel une paroi d'extrémité arrière (48e) du pot d'échappement (35F) forme une extrémité arrière de la seconde chambre d'expansion (46) et est inclinée vers l'avant et le haut et au moins une partie arrière du tube de communication (64) soit configurée pour être inclinée vers l'arrière et le bas.

7. Système d'échappement pour une motocyclette selon la revendication 5 ou 6, dans lequel le tuyau de queue (57) pour décharger le gaz d'échappement de la seconde chambre d'expansion (46) est raccordé à une partie supérieure arrière du pot d'échappement (35F) de manière à communiquer avec une partie supérieure de la seconde chambre d'expansion (46).

8. Système d'échappement pour une motocyclette selon la revendication 7, dans lequel, dans la seconde chambre d'expansion (46), une extrémité arrière (64b) du tube de communication (64) est aménagée à l'arrière d'une partie (65) du tuyau de queue (57) qui communique avec la seconde chambre d'expansion (46).

9. Motocyclette ayant un système d'échappement selon l'une quelconque des revendications précédentes.
